# FASCICULE DE BREVET EUROPEEN

(11) **EP 1 916 385 B1**
(45) Date de publication et mention de la délivrance du brevet: **09.12.2009**
(21) Numéro de dépôt: 07118695.1
(22) Date de dépôt: 17.10.2007
(51) Int. Cl.: F01D 5/14, F02K 3/06

(54) **Nageoire de plateforme de soufflante**
Plattformflosse eines Gebläses
Sponson of fan platform

(30) Priorité: 20.10.2006 FR 0654393
(43) Date de publication de la demande: 30.04.2008
(73) Titulaire: SNECMA, 75015 Paris (FR)
(72) Inventeur: Aubin, Stephan, 94700 Maisons Alfort (FR)
(74) Mandataire: Barbin le Bourhis, Joël

(56) Documents cités:
- EP-A- 0 978 632
- EP-A- 1 126 132
- DE-A1- 2 135 286
- FR-A- 2 054 402
- FR-A1- 2 432 608
- FR-A1- 2 485 620
- GB-A- 2 042 675

## Description

La présente invention concerne une plateforme de soufflante d'une turbomachine double flux avec un flux primaire et un flux secondaire, la plateforme définissant une partie de la surface du nez autour duquel circule le flux primaire et portant des aubes s'étendant radialement extérieurement à partir de la plateforme.

Dans une turbomachine, l'air entrant se scinde en deux flux, un flux primaire qui s'écoule dans la région la plus centrale, et un flux secondaire qui entoure circonférentiellement le flux primaire. La limite radialement extérieure du flux primaire, c'est-à-dire la région où les flux primaire et secondaire se touchent, forme sensiblement un cylindre dont l'axe est parallèle à l'axe principal de la turbomachine. Lorsqu'il entre en contact avec le nez de la turbomachine, le flux primaire, dans sa région centrale, s'écoule en tournant et en suivant les parois du nez de la turbomachine, qui a une forme de cône qui s'évase dans le sens de l'écoulement de l'air jusqu'à l'entrée d'une veine circonférentielle, où les parois du nez deviennent progressivement parallèles à l'axe principal de la turbomachine. Une partie de la paroi conique du nez, en amont de la veine dans le sens de circulation du flux primaire, est constituée par une plateforme, dite plateforme de soufflante, qui porte des aubes. Ces aubes permettent de comprimer et donner un mouvement de rotation axiale à l'air du flux primaire. En progressant le long de ce cône entre les aubes de soufflante jusqu'à l'entrée de la veine tout en tournant, le flux primaire est de plus comprimé radialement entre la paroi du cône et le flux d'air secondaire, et sa limite intérieure s'éloigne de l'axe principal de la turbomachine. Ce mécanisme permet d'obtenir à l'entrée de la veine un air comprimé dont l'énergie a été augmentée puisqu'il tourne par rapport à l'axe principal de la turbomachine à un rayon moyen (distance moyenne par rapport à l'axe principal) qui est supérieur à son rayon moyen initial.

Le document EP 11 26 132 décrit les caractéristiques du préambule de la revendication 1.

Les flux primaires et secondaires se séparent à l'entrée de la veine circonférentielle entourant le nez de la turbomachine, le flux primaire pénétrant dans la veine, et le flux secondaire s'écoulant le long de la surface radialement extérieure de la paroi annulaire délimitant extérieurement la veine. Dans cette veine sont situées des aubes qui s'étendent radialement et permettent de comprimer davantage le flux primaire. Il est désirable que l'air du flux primaire pénétrant dans la veine soit le plus comprimé possible, afin de faciliter le travail de compression de cet air par le compresseur basse pression de la veine. L'efficacité de la compression de l'air du flux primaire par les aubes de soufflante augmente avec le nombre d'aubes. Cependant le coût des aubes est important. On peut proposer d'en réduire le nombre. En outre, réduire le nombre d'aubes conduit à une réduction du poids de la plateforme, donc à une réduction de son inertie. Cependant, dans une plateforme de soufflante comportant moins d'aubes, la compression de l'air passant entre les aubes est plus difficile à réaliser. Il en résulte un travail du compresseur en aval plus difficile à réaliser.

La présente invention vise à remédier à ces inconvénients, ou tout au moins à les atténuer.

L'invention vise à proposer une plateforme de soufflante d'une turbomachine qui permette de comprimer l'air du flux primaire le plus efficacement possible, pour un nombre donné d'aubes que porte la plateforme.

Ce but est atteint grâce au fait que la plateforme comporte entre deux aubes adjacentes au moins une nervure dépassant dans l'espace entre les deux aubes, cette nervure étant destinée à participer à la compression de l'air du flux primaire, et s'étendant dans les 40 % les plus en aval de l'espace délimité par les aubes, dans le sens de circulation du flux primaire.

Grâce à ces nervures qui dépassent dans l'espace où circule le flux primaire, l'air du flux primaire passant entre les aubes est comprimé davantage par rapport à une configuration sans nervures. De plus, chaque nervure permet d'atténuer l'ampleur du tourbillon qui se développe depuis le bord d'attaque de chaque aube (c'est-à-dire l'extrémité de l'aube la plus en amont dans le sens de circulation du flux primaire) à l'endroit où celle-ci rejoint la plateforme. Ces tourbillons sont des zones de turbulence qui sont indésirables car ils diminuent les performances des aubes. Une plateforme selon l'invention est donc sensiblement aussi efficace qu'une plateforme portant plus d'aubes, mais globalement moins chère et plus légère car les nervures, moins chères à fabriquer qu'une aube et comportant moins de matière, remplacent une partie des aubes.

Avantageusement la nervure s'étend dans les 30% les plus en aval de l'espace délimité par les aubes, dans le sens de circulation du flux primaire.

Cette position de la nervure permet de diminuer l'ampleur du tourbillon qui se développe depuis le bord d'attaque d'une aube, et qui crée une zone de turbulence qui perturbe l'écoulement de l'air entre les aubes.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une coupe longitudinale de la partie avant d'une turbomachine double flux montrant la disposition du flux primaire et du flux secondaire,
- la figure 2 est une vue en perspective d'une plateforme selon l'invention montrant deux aubes adjacentes,
- la figure 3 est une coupe transversale selon la ligne III-III de la figure 2,
- la figure 4 montre une plateforme selon l'invention, dans le cas où les nervures comportent un bord de fuite arrondi,
- les figures 5A et 5B, illustrent une plateforme selon l'invention, dans le cas où les nervures ne sont pas rectilignes,
- la figure 6 illustre une plateforme selon l'invention, dans le cas où les espaces entre deux aubes adjacentes comportent deux nervures.

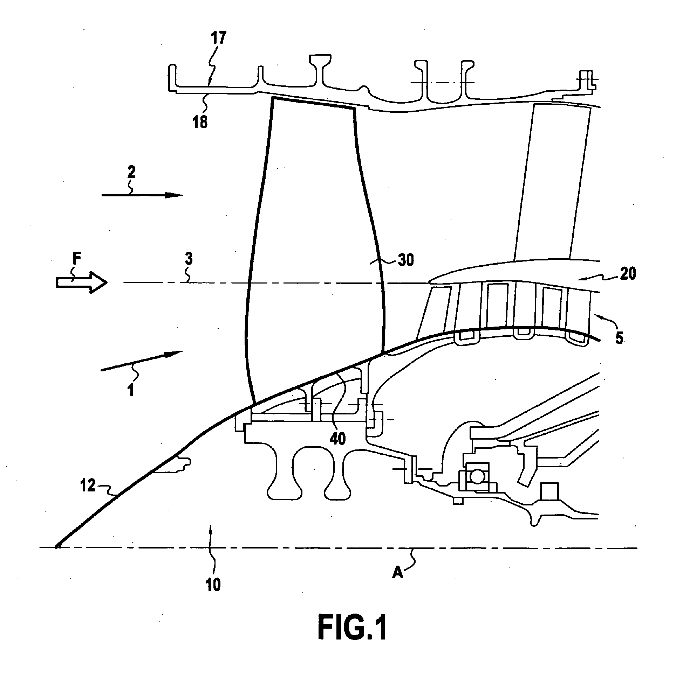

La figure 1 montre la partie avant d'une turbomachine double flux dont l'axe principal est l'axe A. Pour raisons de symétrie par rapport à l'axe A, seule la moitié supérieure de la turbomachine est représentée. Dans la description qui suit, on désignera par "avant" la partie d'une pièce située en amont du flux d'air s'écoulant dans la turbomachine, et par "arrière" la partie de la pièce située plus en aval de ce flux d'air.

L'avant de la turbomachine comporte un nez 10 dont la pointe est dirigée vers l'avant, c'est-à-dire vers la gauche sur la figure 1. Ce nez s'évase tout d'abord vers la droite en suivant sensiblement la forme d'un cône, puis les parois du nez deviennent progressivement parallèles à l'axe A de façon à former sensiblement un cylindre d'axe A. Le nez 10 est entouré par un carter extérieur 17 sensiblement cylindrique et ayant pour axe de symétrie l'axe A. La surface radialement intérieure 18 du carter extérieur 17 et la surface 12 du nez 10 définissent une région annulaire dans laquelle circule le flux d'air. La turbomachine avance de la droite vers la gauche, donc le flux d'air circule entre le carter extérieur 17 et le nez 10 de la gauche vers la droite dans le sens de la flèche F.

En retrait, c'est-à-dire en arrière, par rapport à l'extrémité avant du carter extérieur 17 se trouve une paroi annulaire 20 ayant sensiblement la forme d'un cylindre d'axe de révolution A. Cette paroi annulaire 20 définit avec le nez 10 une veine annulaire 5. La paroi annulaire 20 divise le flux d'air en un flux primaire 1 qui entre dans la veine 5, et un flux secondaire 2 qui entoure circonférentiellement le flux primaire 1. Ainsi, le flux primaire est délimité par le nez 10 et le flux secondaire, puis par le nez 10 et la paroi annulaire 20, tandis que le flux secondaire est délimité par le flux primaire et par la surface radialement intérieure 18 du carter extérieur 17, puis par la paroi annulaire 20 et par la surface radialement intérieure 18 du carter extérieur 17. La région de séparation entre le flux primaire 1 et le flux secondaire 2 en avant de la paroi annulaire 20 a donc sensiblement la forme d'un cylindre 3 dont l'axe de symétrie est l'axe A.

Au fur et à mesure de sa progression dans la turbomachine, le flux secondaire 2 a donc une section constante et occupe un volume annulaire défini par le cylindre 3 et la surface radialement intérieure 18 du carter extérieur 17. En revanche, étant donné que le nez 10 est de forme conique, la section transversale de la région annulaire dans laquelle circule le flux d'air primaire 1 diminue au fur et à mesure que l'air progresse dans la turbomachine (de la gauche vers la droite sur la figure 1), car cette région est délimitée extérieurement par le cylindre 3, et intérieurement par la surface 12 du nez 10 qui s'éloigne progressivement de l'axe A dans le sens de circulation du flux d'air. L'air qui pénètre dans la veine 5 est donc comprimé.

En outre, une partie circonférentielle de la surface 12 du nez 10, en avant de la veine 5, est constituée par une plateforme 20 de soufflante, qui porte des aubes 30. Ces aubes 30 sont réparties le long de la circonférence de la plateforme 40 à intervalles réguliers, et permettent de comprimer et donner un mouvement de rotation axiale à l'air du flux primaire 1.

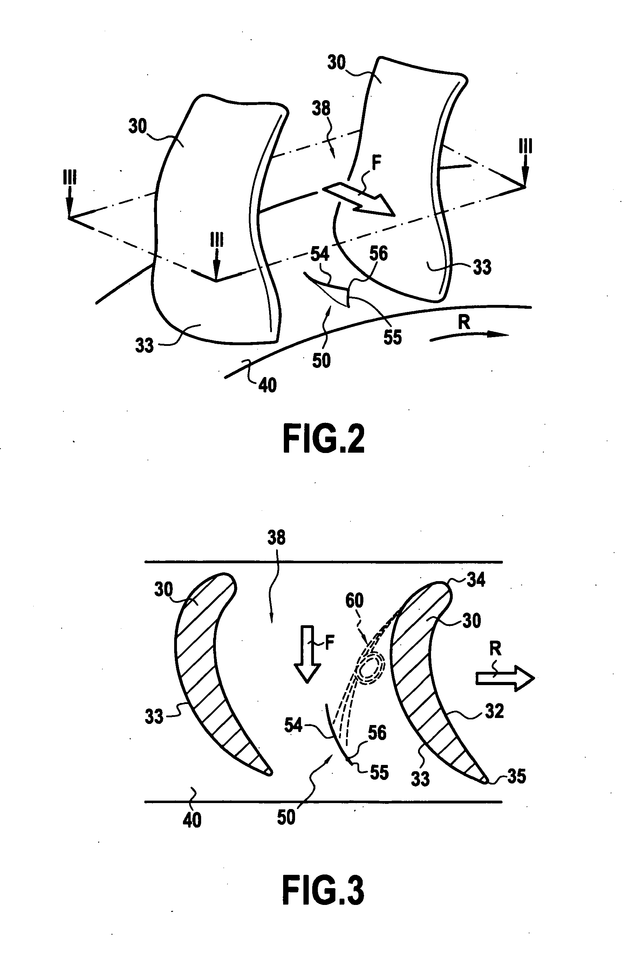

Comme représenté sur les figures 2 et 3, les aubes 30 sont incurvées le long de leur largeur (la largeur d'une aube étant sa dimension sensiblement dans la direction de l'axe principal A de la turbomachine) de telle sorte que chaque aube 30 présente une face concave 32 et une face convexe 33, qui se rejoignent en avant au bord d'attaque 34, et en arrière au bord de fuite 35. La face concave 32 des aubes 30 est orientée en direction du sens de rotation de la plateforme 40, ce sens de rotation étant représenté sur les figures 2 et 3 par la flèche R, de la gauche vers la droite. La flèche R est donc sensiblement perpendiculaire à l'axe A. La face convexe 33 d'une aube 30 est située en regard de la face concave 32 de l'aube 30 adjacente. Deux aubes 30 adjacentes définissent un espace 38. Le flux primaire circule dans l'espace 38 depuis les bords d'attaque 34 des aubes 30 vers les bords de fuite 35, dans le sens de la flèche F, et est comprimé lors de ce passage.

La plateforme 40 comporte une nervure 50 qui s'étend sur une ligne située sensiblement à égale distance de deux aubes adjacentes 30. La nervure 50 possède un bord d'attaque 54 situé vers l'avant, et un bord de fuite 55 situé vers l'arrière. La nervure 50 a la forme d'un aileron qui s'étend radialement vers l'extérieur par rapport à la plateforme 40, c'est-à-dire qu'elle est sensiblement perpendiculaire à la plateforme 40. La nervure 50 peut être rectiligne, ou incurvée de façon similaire aux aubes 30 et dans le même sens. La nervure 50 est d'une hauteur inférieure à celle des aubes 30, voire très inférieure. La nervure 50 peut être forgée avec la plateforme 40. La nervure 50 peut aussi être usinée dans la plateforme 40.

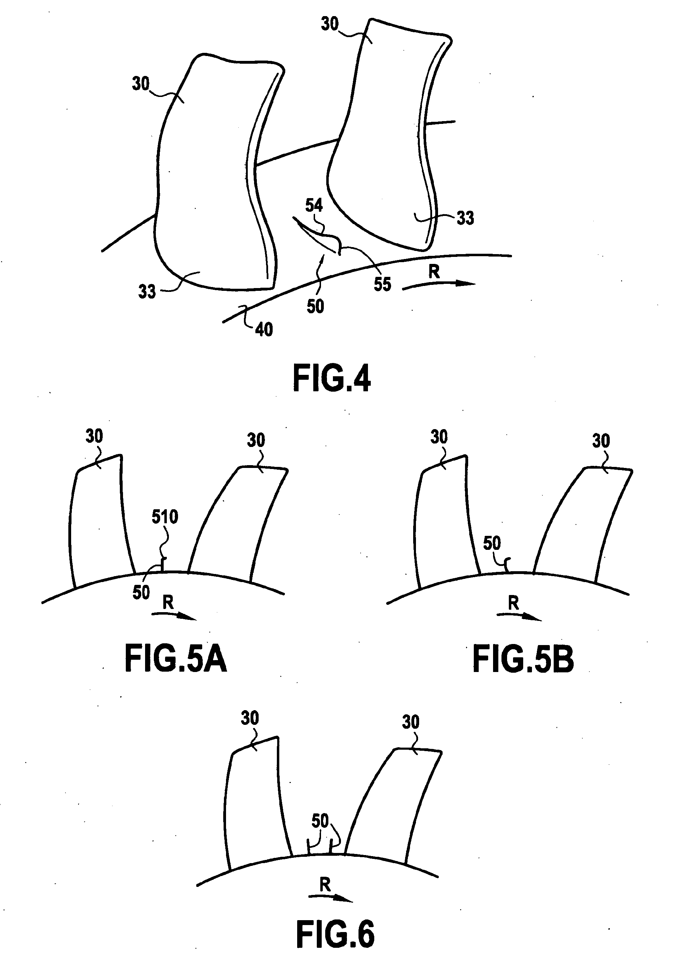

Comme représenté sur la figure 3, le bord d'attaque 54 forme avec la plateforme 40 un angle plus faible que l'angle que le bord de fuite 55 forme avec la plateforme 40, de telle sorte que le sommet 56 de la nervure 50, c'est-à-dire le point de la nervure le plus éloigné de la plateforme 40, est plus proche de l'endroit où le bord de fuite 55 rejoint la plateforme 40 que de l'endroit où le bord d'attaque 54 rejoint la plateforme 40. Par exemple, le sommet 56 peut se trouver dans le prolongement du bord de fuite 55 qui est rectiligne. Par exemple, le bord de fuite 55 peut s'étendre radialement perpendiculairement à la plateforme 40 de telle sorte que le sommet 56 se situe radialement à la verticale de l'endroit où le bord de fuite 55 rejoint la plateforme 40. Alternativement, comme représenté sur la figure 4, la nervure 50 peut avoir un bord de fuite 55 arrondi.

Sur les figures 2 et 3, la nervure 50 se situe dans la zone la plus en arrière de l'espace 38, c'est-à-dire plus près des bords de fuite 35 que des bords d'attaque 34 des aubes 30. Ainsi, la nervure 50 atténue plus efficacement l'ampleur du tourbillon 60 qui se développe dans l'espace 38 depuis le bord d'attaque 34 de l'aube 30. Par exemple, la nervure 50 est positionnée de telle sorte que 60% de l'espace 38 se situe en avant de l'endroit où le bord d'attaque 54 rejoint la plateforme 40 et 40% de l'espace 38 se situe en arrière de l'endroit où le bord d'attaque 54 rejoint la plateforme 40. Par exemple, la nervure 50 est positionnée de telle sorte que 70% de l'espace 38 se situe en avant de l'endroit où le bord d'attaque 54 rejoint la plateforme 40 et 30% de l'espace 38 se situe en arrière de l'endroit où le bord d'attaque 54 rejoint la plateforme 40.

La nervure 50 peut se situer entièrement dans un plan radial par rapport à l'axe A, perpendiculaire à la plateforme 40. La nervure 50 peut également avoir son extrémité radialement extérieure 510 inclinée en direction du sens de rotation de la plateforme 40, représenté par la flèche R sur la figure 5A, c'est-à-dire de la gauche vers la droite. Ainsi, l'extrémité radialement extérieure 510 forme un angle avec la partie radialement intérieure de la nervure perpendiculaire à la plateforme 40, comme représenté sur la figure 5A. La nervure 50 peut également comporter le long de sa direction radiale plusieurs parties successivement inclinées l'une par rapport à l'autre en direction du sens de rotation de la plateforme 40.

Comme représenté sur la figure 5B, la nervure 50 peut également être incurvée dans son ensemble le long de sa direction radiale en direction du sens de rotation de la plateforme 40, représenté par la flèche R. Dans ce cas, la partie de la nervure 50 où celle-ci rejoint la plateforme 40 peut être perpendiculaire à la plateforme, ou être inclinée par rapport à la plateforme 40 en direction opposée à son sens de rotation.

La présente demande ne se limite pas aux modes de réalisation ci-dessus. Ainsi, entre chaque paire d'aubes adjacentes 30 peuvent se trouver plusieurs nervures 50. Par exemple la plateforme 40 comporte entre deux aubes adjacentes 30 deux nervures 50, comme représenté sur la figure 6.

## Revendications

1. Plateforme (40) de soufflante d'une turbomachine double flux avec un flux primaire (1) et un flux secondaire (2), ladite plateforme définissant une partie de la surface du nez autour duquel circule le flux primaire et portant des aubes (30) s'étendant radialement extérieurement à partir de ladite plateforme (40), **caractérisée en ce qu'**elle comporte entre deux aubes (30) adjacentes au moins une nervure (50) dépassant dans l'espace (38) entre les deux aubes (30), ladite au moins une nervure (50) étant destinée à participer à la compression de l'air du flux primaire (1), et s'étendant dans les 40 % les plus en aval de l'espace (38) délimité par les aubes (30), dans le sens de circulation du flux primaire (1).

2. Plateforme (40) de soufflante selon la revendication 1, **caractérisée en ce que** ladite au moins une nervure (50) s'étend dans les 30% les plus en aval de l'espace (38) délimité par les aubes (30), dans le sens de circulation du flux primaire (1).

3. Plateforme (40) de soufflante selon la revendication 1 ou 2, **caractérisée en ce que** ladite au moins une nervure (50) est forgée avec la plateforme (40).

4. Plateforme (40) de soufflante selon la revendication 1 ou 2, **caractérisée en ce que** ladite au moins une nervure (50) est usinée dans la plateforme (40).

5. Plateforme (40) de soufflante selon l'une des revendications 1 à 4, **caractérisée en ce que** la distance entre le sommet (56) de ladite au moins une nervure (50) et l'endroit où le bord d'attaque (54) de cette nervure rejoint ladite plateforme (40) est plus grande que la distance entre ledit sommet (56) et l'endroit où le bord de fuite (55) de cette nervure rejoint ladite plateforme (40).

6. Plateforme (40) de soufflante selon l'une des revendications 1 à 5, **caractérisée en ce que** l'extrémité radialement extérieure (510) de ladite au moins une nervure (50) est inclinée en direction du sens de rotation de ladite plateforme (40).

7. Plateforme (40) de soufflante selon l'une des revendications 1 à 5, **caractérisée en ce que** ladite au moins une nervure (50) est incurvée dans son ensemble le long de sa direction radiale en direction du sens de rotation de ladite plateforme (40).

8. Plateforme (40) de soufflante selon l'une des revendications 1 à 6, **caractérisée en ce qu'**elle comporte deux nervures (30) entre deux aubes (30) adjacentes.

9. Soufflante de turbomachine comportant des aubes rattachées à une plateforme selon l'une des revendications précédentes.

10. Turbomachine munie d'une soufflante selon la revendication 9.

## Claims

1. A fan platform (40) for a bypass turbomachine having a primary stream (1) and a secondary stream (2), said platform defining a portion of the surface of the nose about which the primary stream flows and carrying blades (30) that extend radially outwards from said platform (40), the platform being **characterized in that** it includes between two adjacent blades (30) at least one rib (50) projecting into the space (38) between the two blades (30), said at least one rib (50) being designed to participate in compressing the air of the primary stream (1), and extending in the space (38) defined between the blades (30) within the 40% thereof that is furthest downstream in the flow direction of the primary stream (1).

2. A fan platform (40) according to claim 1, **characterized in that** said at least one rib (50) extends in the space (38) defined between the blades (30) within the 30% furthest downstream in the flow direction of the primary stream (1).

3. A fan platform (30) according to claim 1 or claim 2, **characterized in that** said at least one rib (50) is forged with the platform (40).

4. A fan platform (40) according to claim 1 or claim 2, **characterized in that** said at least one rib (50) is machined in the platform (40).

5. A fan platform (40) according to one of claims 1 to 4, **characterized in that** the distance between the tip (56) of said at least one rib (50) and the location where the leading edge (54) of said rib meets said platform (40) is greater than the distance between said tip (56) and the location where the trailing edge (55) of said rib meets said platform (40).

6. A fan platform (40) according to one of claims 1 to 5, **characterized in that** the radially-outer end (510) of said at least one rib (50) is inclined in the direction of rotation of said platform (40).

7. A fan platform (40) according to one of claims 1 to 5, **characterized in that** said at least one rib (50) is curved over its entire radial extent in the direction of rotation of said platform (40).

8. A fan platform (40) according to one of claims 1 to 6, **characterized in that** it includes two ribs (30) between two adjacent blades (30).

9. A turbomachine fan comprising blades attached to a platform according to one of the preceding claims.

10. A turbomachine provided with a fan according to claim 9.

## Patentansprüche

1. Plattform (40) eines Verdichters einer Zweistrom-Turbomaschine mit einem Primärstrom (1) und einem Sekundärstrom (2), wobei die Plattform einen Teil der Fläche der Haube definiert, um die der Primärstrom zirkuliert, und Schaufeln (30) trägt, die sich radial von der Plattform (40) nach außen erstrecken, **dadurch gekennzeichnet, daß** sie zwischen zwei benachbarten Schaufeln (30) wenigstens eine Rippe (50) aufweist, die in den Raum (38) zwischen den zwei Schaufeln (30) steht, wobei die wenigstens eine Rippe (50) dazu bestimmt ist, an der Verdichtung der Luft des Primärstroms (1) teilzunehmen, und sich in den am weitesten stromabwärts gelegenen 40% des Raums (38) erstreckt, der von den Schaufeln (30) in der Zirkulationsrichtung des Primärstroms (1) abgegrenzt wird.

2. Plattform (40) eines Verdichters nach Anspruch 1, **dadurch gekennzeichnet, daß** sich die wenigstens eine Rippe (50) in den am weitesten stromabwärts gelegenen 30 % des Raums (38) erstreckt, der von den Schaufeln (30) in der Zirkulationsrichtung des Primärstroms (1) abgegrenzt wird.

3. Plattform (40) eines Verdichters nach Anspruch 1 oder 2, **dadurch gekennzeichnet, daß** die wenigstens eine Rippe (50) mit der Plattform (40) geschmiedet ist.

4. Plattform (40) eines Verdichters nach Anspruch 1 oder 2, **dadurch gekennzeichnet, daß** die wenigstens eine Rippe (50) in die Plattform (40) gearbeitet ist.

5. Plattform (40) eines Verdichters nach einem der Ansprüche 1 bis 4, **dadurch gekennzeichnet, daß** die Entfernung zwischen dem Scheitel (56) der wenigstens einen Rippe (50) und der Stelle, an der die Leitkante (54) dieser Rippe die Plattform (40) erreicht, größer ist als die Entfernung zwischen dem Scheitel (56) und der Stelle, an der die Austrittskante (55) dieser Rippe auf die Plattform (40) trifft.

6. Plattform (40) eines Verdichters nach einem der Ansprüche 1 bis 5, **dadurch gekennzeichnet, daß** das radial äußere Ende (510) der wenigstens einen Rippe (50) in Richtung der Drehrichtung der Plattform (40) geneigt ist.

7. Plattform (40) eines Verdichters nach einem der Ansprüche 1 bis 5, **dadurch gekennzeichnet, daß** die wenigstens eine Rippe (50) insgesamt entlang ihrer radialen Richtung in Richtung der Drehrichtung der Plattform (40) gebogen ist.

8. Plattform (40) eines Verdichters nach einem der Ansprüche 1 bis 6, **dadurch gekennzeichnet, daß** sie zwei Rippen (30) zwischen zwei benachbarten Schaufeln (30) aufweist.

9. Verdichter für Turbomaschine mit Schaufeln, die an eine Plattform gemäß einem der vorhergehenden Ansprüche anschließen.

10. Turbomaschine mit einem Verdichter nach Anspruch 9.
